# EUROPEAN PATENT SPECIFICATION

(11) **EP 3 479 910 B1**
(45) Date of publication and mention of the grant of the patent: **11.05.2022**
(21) Application number: 18204214.3
(22) Date of filing: 02.11.2018
(51) Int. Cl.: B05C 5/00, B28B 11/00, B28B 11/04, B28B 17/00, B41M 5/00, B41J 3/407, B41J 11/00, B41J 13/00, B65G 47/31, B05B 16/20, B05B 16/00, B65G 43/10

(54) **METHOD FOR CARRYING CERAMIC TILES OR SLABS ALONG A DECORATION LINE, AND SYSTEM FOR CARRYING OUT SAID METHOD**
VERFAHREN ZUM TRANSPORTIEREN VON KERAMISCHEN FLIESEN ODER PLATTEN AUF EINE DEKORATIONSANSLAGE UND EIN TRANSPORTSYSTEM, DAS DIESES VERFAHREN IMPLEMENTIERT
PROCEDE POUR TRANSPORTER DES CARREAUX OU DES DALLES CERAMIQUES SUR UNE CHAINE DE PEINTURE, ET SYSTEME DE TRANSPORT QUI MET EN OEUVRE CE PROCEDE

(30) Priority: 03.11.2017 IT 201700125219
(43) Date of publication of application: 08.05.2019
(73) Proprietor: Air Power Group S.p.A., 42013 Casalgrande (Reggio Emilia) (IT)
(72) Inventor: Paolo, Malavasi, 42013 Casalgrande (IT)
(74) Representative: Ruzzu, Giammario

(56) References cited:
- EP-A2- 0 382 945
- WO-A1-2016/042496
- JP-A- S60 161 820

## Description

The present invention relates to the technical field of the ceramic industry, with particular reference to the decoration process of ceramic tiles and/or slabs to give their main surface the desired chromatic and/or graphic treatment.

### PRIOR ART OF THE INVENTION

One of the most used of the above mentioned decoration processes is carried out by spraying a ceramic glaze on the tiles, which takes place in glazing chambers served by belt conveyors, which feed the tiles making them pass under the spraying nozzles inside.

Usually, the nozzles are moved crosswise to the direction of the tiles advancing, so the glaze is applied by the combination of two movements.

For a uniform result it is necessary that the tiles advance under the nozzles with constant speed and without stops, to avoid the formation of areas with the glaze layer of different thickness.

A decoration line is often composed of a certain number of glazing chambers arranged in series, at a suitable distance from each other along a common belt conveyor.

Therefore, in the event of problems that make it necessary to stop the conveyor, a certain number of tiles to be rejected must be taken into account, i.e. those that are inside one of the glazing chambers at the time of stopping.

If the financial loss can be considered limited for small tiles, it becomes very high in the case of large ceramic slabs, of the order of a few square meters of surface area, which are currently enjoying much success in high-end ceramic production.

As it is easy to understand, the dimensions of these slabs, in particular of the one in the advancement direction, greatly increase the probability of production waste in case of stopping the decoration line.

This danger adds to the technical challenges that these large slab sizes pose at all stages of the production cycle, with the risk that a high percentage of waste will erode the profit margin to unsustainable levels.

For example, if there is a problem that compromises the quality of a slab, it is necessary to remove it from the decoration line.

The operation is not immediate, as is the case with small tiles, as it cannot be carried out manually by the operator, but the intervention of more than one person and/or lifting equipment is required.

In addition, it is very likely that during the operation the slab breaks, and the line must be cleared from the fragments.

This leads to a long period of downtime of the decoration line, and therefore to a consequent loss of production.

Another problem that occurs in the management of a line for the decoration of ceramic slabs or tiles derives from the fact that the devices and equipment of the line must not be operated at too high speeds with respect to the production. All in all, it is necessary and advantageous to maximize the flow of product while maintaining its transport speed as low as possible.

PCT Application published to No. WO2016/042496 to SYSTEM S.p.A. discloses a method for carrying ceramic tiles or slabs along a decoration line, this latter being formed by a plurality of spray decoration stations arranged in series, in which said ceramic tiles or slabs are intended to enter, pass through and exit with a constant advancement speed, said decoration stations being provided with respective internal conveyors, activated independently from one another, and with at least one independently operated connecting conveyor provided between said decoration stations, said method comprising: positioning at least one of said ceramic tiles or slabs upstream of a first decoration station belonging to said decoration line; starting introduction and transit of at least one of said ceramic tiles or slabs at the first decoration station or any of the subsequent decoration stations.

It discloses also a system for carrying ceramic tiles or slabs conveyed along a decoration line, said system including a plurality of spray decoration stations arranged in series, in which said ceramic tiles or slabs are intended to enter, pass through and exit with a constant advancement speed, said system comprising:
- a positioning and grouping station, defined along a first independently powered conveyor, located directly upstream of the inlet of the first of said spray decoration stations and aimed at receiving at least one of said ceramic tiles or slabs;
- at least one second independently powered conveyor, extending between the inlet and outlet of said first spray decoration station;
- at least one third conveyor, located directly downstream of said first spray decoration station;
- at least one upstream conveyor, at least one internal conveyor and at least one downstream conveyor, associated with each of the spray decoration stations following the first one;
- means for operating, in step relation, said first and second independently powered conveyors as well as said conveyors with independent power means provided upstream, inside each of the spray decoration stations following the first one, to determine, in the following order, the entry of said at least one ceramic tile or slab into the first spray decoration station and the following spray decoration stations, the transit through and full exit from these latter of said at least one ceramic tile or slab, with constant advancing speed and without stops.

### OBJECTS OF THE INVENTION

Therefore, it is an object of the present invention to propose a method for the transport of ceramic tiles or slabs on a decoration line, in which there are a series of spray decoration stations, which avoid production rejection caused by any inconvenience that hinders the regular advancement of these ceramic tiles or slabs along the line.

Another object of the invention is to propose a method that allows untying regular functionality of one decoration station from the next one, so that possible stopping of the feeding of material in one decoration station does not cause a sequence of stops upstream and, consequently, no waste is produced in the previous decoration stations.

A still further object of the invention is to propose a method which includes checking if there is the possibility of letting the material being worked to go completely in and out from each of the decoration stations, with constant speed and without stops, before it is allowed to enter and regardless of what happens in the station(s) downstream.

A further object of the invention is to propose the method that is able to ensure regular functionality of the decoration stations following the one blocked by an obstacle, so as to evacuate the portion downstream of the decoration line before the advancement of the upstream stations is restored.

Yet another object of the method proposed by the invention is to provide a selective activation of the nozzles of the various spray decoration stations, in step with the movement or stop of ceramic tiles or slabs carried along the decoration line.

A further object of the invention is to propose a system for the transport of ceramic tiles or slabs for the optimal implementation of the above method through the subsequent decoration stations, in particular with regard to the technique for the realization of the transport system for the advancement of ceramic tiles or slabs along the same decoration line.

Another object of the invention is to obtain the above mentioned objects by keeping the transport speed on the decoration line as low as possible with the same line productivity.

### SUMMARY OF THE INVENTION

These and other objects are fully obtained by a method for the transport of ceramic tiles or slabs on a decoration line, this latter being formed by a plurality of spray decoration stations arranged in series, in which said ceramic tiles or slabs are intended to enter, pass through and exit with a constant advancement speed, said decoration stations being provided with the respective independently activated conveyors, and with at least one independently operated connecting conveyor provided between said decoration stations and controlled by a control unit upon suitable consents, said method comprising: positioning at least one of said ceramic tiles or slabs upstream of a first decoration station belonging to said decoration line, occupying a total space in length less than or equal to the minimum distance between two mentioned consecutive decoration stations; activation of the introduction and transit of at least one of said ceramic tiles or slabs at the first decoration station or any of the mentioned subsequent decoration stations only upon receipt of a consent indicative of the absence of further slabs or tiles on the connecting conveyor directly downstream of the decoration station involved.

The above objects, together with others, are also wholly obtained by a system for carrying ceramic tiles or slabs, said tiles or slabs being conveyed along a decoration line, said system including a plurality of spray decoration stations arranged in series, in which said ceramic tiles or slabs are intended to enter, pass through and exit with a constant advancing speed, said system comprising:
- a positioning and grouping station, defined along a first independently powered conveyor, located directly upstream of the inlet of the first of said spray decoration stations and aimed at receiving at least one of the mentioned ceramic tiles or slabs;
- at least one second independently powered conveyor, extending between the inlet and outlet of said first spray decoration station;
- at least one third independently powered conveyor, located directly downstream of said first spray decoration station and having longitudinal dimension at least sufficient to accommodate said at least one ceramic tile or slab coming out from the mentioned first spray decoration station;
- at least one upstream conveyor, at least one internal conveyor and at least one downstream conveyor, with respective independent power means, associated with each of the spray decoration stations following the first one;
- detecting means, arranged along said third conveyor as well as along each of said downstream conveyors, to monitor transit of said at least one ceramic tile or slab thereon, or to check the presence or absence of a relative free longitudinal portion sufficient to accommodate one of the mentioned ceramic tiles or slabs coming out of the decoration station directly upstream;
- means for operating, in step relation, said first, second, and third independently powered conveyors as well as the mentioned conveyors with independent power means provided upstream, inside and downstream of each of the spray decoration stations following the first one to determine, in the following order, the entry of said at least one ceramic tile or slab into the first spray decoration station and the following spray decoration stations, the transit through and full exit from these latter of said at least one ceramic tile or slab, with constant advancing speed and without stops;
- means for stopping the upstream conveyor and the internal conveyor of any spray decoration station before said ceramic tiles or slabs enter the latter, in the presence of an impediment along the respective downstream conveyor detected by said detecting means, said stopping means being provided for selectively deactivating, in suitable step relation, the respective conveyors of the preceding decoration stations, so as to prevent the corresponding ceramic tiles or slabs from entering the stations, and/or to allow the completion of the exit of ceramic tiles or slabs, in case there are any, and let them stay on the respective downstream conveyor.

### BRIEF DESCRIPTION OF THE DRAWINGS

The characteristics of the invention under discussion will be evident from the following description of the steps for carrying out the proposed method, as well as a possible embodiment of the transport system that carries out the method, in accordance with what is proposed in the claims and with the help of the enclosed figures, in which:
- Fig. 1 is a schematic side view of a decoration line having more spray decoration stations, including the transport system proposed by the invention, in a preliminary step of the method;
- Fig. 2 illustrates, in a view similar to Fig. 1, a first operational step of the method;
- Figs. 3A, 3B, 3C illustrate, in views similar to the previous ones, three different moments of normal operating conditions along the decoration line;
- Fig. 4 shows, in a view similar to the previous ones, a step of the method following a stop in a downstream decoration station;
- Figs. 5A, 5B illustrate, in views similar to the previous ones, two different moments of the steps of the method following a stop in an upstream decoration station.

### DETAILED DESCRIPTION OF THE INVENTION

In the above figures, reference number 1 indicates a system for transporting ceramic tiles or slabs P on a decoration line LD as a whole, intended for carrying out the method proposed by the invention.

The decoration line LD is formed, in a known way, by a number of spray decoration stations arranged in series (three of which S1, S2, S3 are illustrated by way of non limiting example in the figures), in which said ceramic tiles or slabs P are intended to enter, pass through and exit with a constant advancing speed, in order to assure a correct application of the ceramic glaze sprayed by an array of U nozzles, preferably moved crosswise to the decoration line LD, with alternating movement of coming and going (the relevant parts are not illustrated as they are known).

Each of said decoration stations S1, S2, S3 is provided with respective independently activated internal conveyors TS1, TS2, TS3, while between two consecutive stations there is at least one independently activated connecting conveyor TR, controlled by a control unit (not illustrated) following suitable consents.

The method proposed by the present invention substantially includes:
- positioning at least one of said ceramic tiles or slabs P upstream of a first decoration station (for example said station S1) belonging to said decoration line LD, occupying a total space in length less than or equal to the minimum distance between the two mentioned consecutive decoration stations;
- activation of the introduction and transit of at least one of said ceramic tiles or slabs P in the first decoration station S1 or any of the mentioned subsequent decoration stations S2, S3 only upon receipt of a consent indicative of the absence of further slabs or tiles P on the connecting conveyor TR directly downstream of the decoration station involved.

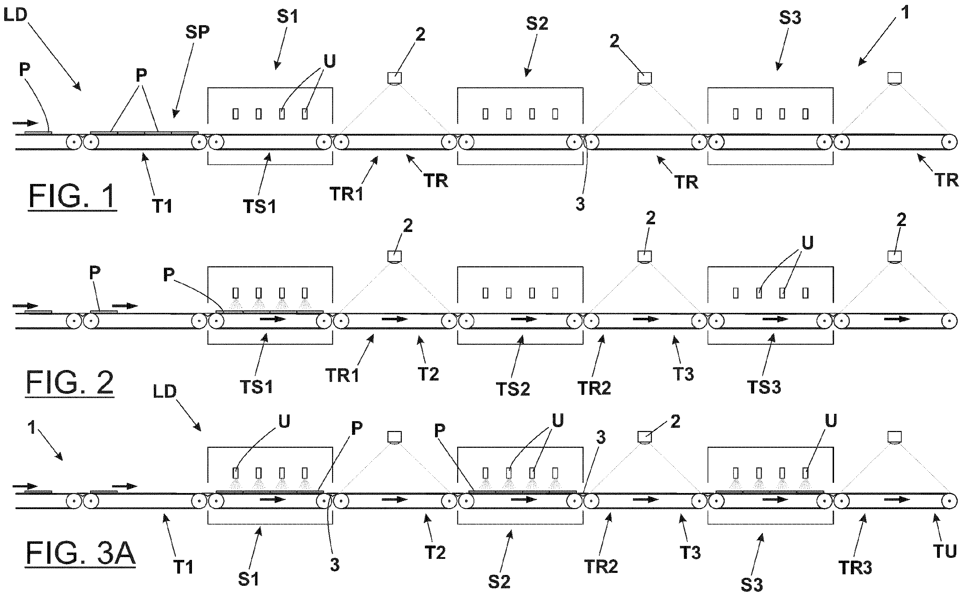

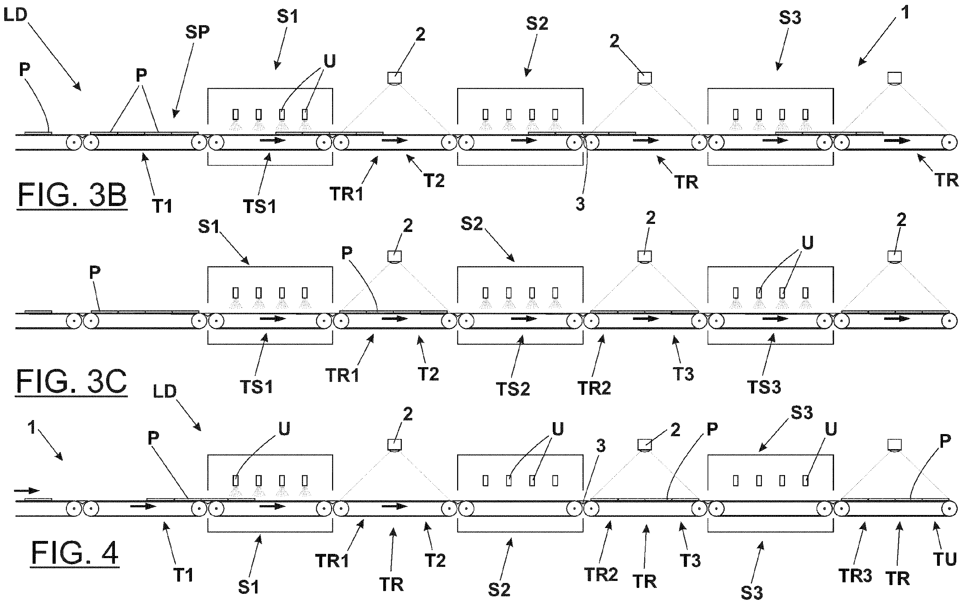

More precisely, the above mentioned method includes in particular:
- at least one of the mentioned ceramic tiles or slabs P reaching a first independently powered conveyor T1, located directly upstream of the inlet of the first of said spray decoration stations S1 having inside a respective second independently powered conveyor TS1;
- checking, by detecting means 2, the absence of impediments or further slabs or tiles P on a third independently powered conveyor TR1 located directly downstream of said first spray decoration station S1, along at least one longitudinal portion of the third conveyor TR1 long enough to hold said at least one ceramic tile or slab P coming out of said first spray decoration station S1;
- operating, in step relation, the mentioned first, second, and third independently powered conveyors T1, TS1, TR1 to determine, in the following order, the entry of said at least one ceramic tile or slab P into the first spray decoration station S1, the transit through and the full exit from the latter of the at least one ceramic tile or slab P, with constant advancing speed and without stops;
- repetition of the previous steps for each of the subsequent spray decoration stations S2, S3, which are associated with a relative upstream conveyor T2, T3, an internal conveyor TS2, TS3 and a downstream conveyor TR2, TR3 with the respective independent power means, with the operation of said conveyors being subject to the aforementioned check of the absence of obstacles or of additional slabs or tiles P, downstream of the corresponding spray decoration station S1, S2, S3;
- stopping the upstream conveyor T1, T2, T3 and the internal conveyor TS1, TS2, TS3 of a spray decoration station S1, S2, S3, before said ceramic tiles or slabs P enter the latter, in case the mentioned check detects an impediment present on the related downstream conveyor TR1, TR2, TR3, or the presence of further slabs or tiles P, with simultaneous stopping of the upstream and internal conveyors of the preceding decoration stations, in such step relation as to prevent the corresponding ceramic tiles or slabs P from entering the stations, and/or to allow completion of the exit of ceramic tiles or slabs P, in case there are any, and let them stay on the respective downstream conveyor TR1, TR2, TR3 (Figs. 3A, 3B, 3C).

For a better understanding of the steps of the above described method, with reference to the enclosed schematic figures, it should be noted that, in the latter, the third conveyor TR1, downstream of the first decorative station S1, also identifies the generically indicated connecting conveyor TR, as well as the upstream conveyor T2 before the second station S2; similarly, the conveyor TR2, downstream of the latter, identifies yet another connecting conveyor TR, as well as the upstream conveyor T3 before the second station S3.

The above would be repeated in the presence of other stations beyond the third station S3; the conveyor TR3 downstream of the third station, in this case, can identify another connecting conveyor TR and also, at least partially, an exit conveyor TU for leaving the LD decoration line.

The method would be carried out essentially in the same way as described before even if there were more than one conveyor in a row between two subsequent stations, where each conveyor could act only according to its position, i.e. downstream conveyor of the previous station, connecting conveyor between two stations and upstream conveyor of the subsequent station.

Advantageously, according to the method, a set of said ceramic tiles or slabs P is formed on said first conveyor T1 (see enclosed figures), one against the other, if the longitudinal extension thereof or that of the connecting conveyors TR allows it.

As already specified, the total length of the set of tiles or slabs P must not exceed that of the minimum free distance between two consecutive decoration stations.

In this working mode, the entrance to the first station S1 is subject to the completion of the above mentioned set of tiles or slabs P.

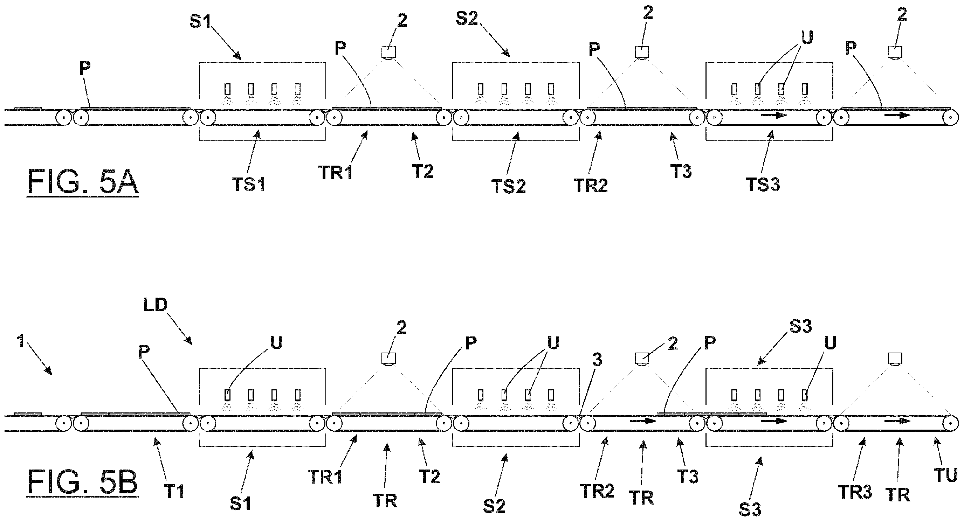

Moreover, according to the method, if the above mentioned check determines an impediment present on the downstream conveyor TR1, TR2, TR3 of one of said spray decoration station S1, S2, S3, with consequent stopping, in step relation, of the conveyors upstream of and inside this decoration station, as well as of conveyors of the previous decoration stations, the conveyors of the decoration stations following the one involved by an impediment directly downstream are kept operating, allowing a regular flow in the corresponding section of the above mentioned decorating line LD (see in particular Figs. 5A, 5B).

The method can include, with relative auxilliary steps, the activation/deactivation of the nozzles U spraying ceramic glaze, present in each of said decoration stations S1, S2, S3, in step relation with the activation/deactivation of the relative upstream conveyors T1, T2, T3 and inside conveyors TS1, TS2, TS3; advantageously, in this way it is possible to save a considerable amount of ceramic glaze and reduce work for recovering it and also for the periodic internal cleaning of the decoration stations S1, S2, S3.

According to the method, the last decoration station (station S3 in the figures) of the above mentioned decoration line LD is excluded from the above checking procedure, if, as supposed above, the relative downstream conveyor TR3 is coincides with at least part of the exit conveyor TU for leaving the decoration line LD.

The system 1 for the transport of ceramic tiles or slabs P, which carries out the above described method, includes a positioning and grouping station SP, defined at said first conveyor by a first independently powered conveyor T1, upstream of the inlet of the first spray decoration station S1.

As already described in the previous description of the method, a ceramic tile or slab P or a set thereof is aligned to the predetermined starting position in the positioning and grouping station SP.

With reference to the first decoration station S1, the system 1 includes said second independently powered conveyor TS1, between the inlet and outlet of the station S1, and the mentioned third independently powered conveyor TR1, downstream thereof.

The system 1 also includes all upstream conveyors T2, T3, internal conveyors TS2, TS3 and downstream conveyors TR2, TR3, with the respective independent power means, associated with each of the spray decoration stations S2, S3 following the first station S1.

The above mentioned conveyors, not illustrated in detail, are preferably of a known type, having endless loop parallel belts between the respective pairs of pulleys, one of which is a driving pulley, so that the horizontal arm of each of these belts, on which the tiles P rest, is the taut one.

If necessary, in the passage area between each of the conveyors and the next one, support elements are interposed, such as, for example, flat laths 3, designed to maintain the continuity of the conveyor plane where the tiles or slabs P flow.

In accordance with the method, the third conveyor TR1, like all the downstream conveyors of other decoration stations S2, S3, has a longitudinal dimension at least sufficient to hold a ceramic tile or slab P, or a set thereof, leaving the first decoration station S1 or a subsequent station S2, S3.

As far as the above mentioned conveyors between the various decoration stations are concerned, three of which S1, S2, S3 have been shown as examples, the system reproduces what has already been said in the description of the method, with regard to the multiple role of each of them, so that in the embodiment shown in the figures, the third conveyor TR1, downstream of the first decoration station S1, also forms the connecting conveyor TR generically indicated in the method, as well as the upstream conveyor T2 that precedes the second station S2; similarly, the downstream conveyor TR2, following the latter, also forms another connecting conveyor TR, as well as the upstream conveyor T3 before the second station S3.

What has just been said could not be confirmed if each of the indicated conveyors between the stations S1, S2, S3 were made up of two or more consecutive conveyors, each independently powered; for example, in the presence of three of said conveyors in a row between two consecutive stations, each would have distinct features, the one leaving the previous station would be the relative downstream conveyor TR1, TR2, TR3, the intermediate connecting conveyor TR, while the one before the next station would be the respective upstream conveyor T2, T3.

A particularly important characteristic of the invention lies in the fact that grouping the slabs or tiles P upstream of the first decoration station S1 allows, advantageously, to optimize the conveyor speed along the whole decoration line LD, keeping it as low as possible in respect to the working capacity of the decoration line LD and depending on the need to keep free all the conveyors downstream of all the decoration stations S1, S2 ... at the same time, when a set of tiles or slabs P passes through them.

In particular, in a decoration line LD in which a number N of formats of slabs or tiles P are decorated, this optimisation is obtained by sizing the length of the conveyors so that each of them can contain exactly a whole number of P slabs or tiles, whatever format is being decorated at that time.

In this regard, the correct dimensioning of the conveyors is obtained considering a length equal to the minimum common multiple of the lengths of the different formats of slabs or tiles P provided for that decoration line LD.

By way of example, if ceramic slabs P of 1, 2 and 3 metres long, are to be decorated on a line LD, conveyors of 6 metres long should be provided, that is, each conveyor should be capable of accommodating 2 slabs P of 3 metres long, 3 slabs P of 2 metres long, or 6 slabs P of 1 metre long. Naturally, when sizing the conveyors, a bigger length must be considered, due to the even minimum spacing that must be provided between one slab or tile P and the next.

In this way it is possible to assure that the passage of the slabs or tiles P in the decoration stations S1, S2... will be done with the highest possible density, always depending on the main feature of the invention, according to which a set of slabs or tiles P are allowed to pass through a decoration station only if there is a downstream conveyor free from other slabs or tiles P.

It should be noted that, with the same productivity of a decoration line LD, low transport speeds are advantageous, both in terms of the cost of manufacturing the different components of the decoration line, and of the reliability and operating life of the same components.

Using a completely mirror-like, but substantially equal reasoning, it can be said that operating the decoration line LD at its maximum design speed, the maximum possible productivity can be achieved.

Detecting means 2, for example of optical type, are provided along the third conveyor TR1, as well as along each of said downstream conveyors TR2, TR3, to monitor the transit of the ceramic tile or slab P thereon, or to check the presence or absence of a relative free longitudinal portion sufficient to house either one of the mentioned ceramic tiles or slabs P or a set thereof where provided, leaving the decoration station directly upstream.

The system 1 includes suitable means for the activation, in step relation, of the mentioned first, second and third independently powered conveyors T1, TS1, TR1, as well as of the mentioned independently powered conveyors T2, T3, associated upstream, TS2, TS3 inside and TR2, TR3 downstream of each of the spray decoration stations S2, S3 following the first one S1, to determine, in the order, the entry of said ceramic tile or slab P, or of a set thereof where provided, in the first spray decoration station S1 and in the following stations S2, S3, the transit and complete exit of the ceramic tile or slab P, or a set thereof, in and from the stations with constant advancing speed and without stops.

There are also means for stopping the upstream conveyor T1, T2, T3 and the internal conveyor TS1, TS2, TS3 of any spray decoration station S1, S2, S3 before said ceramic tiles or slabs P enter the decoration station, in the presence of an impediment on the relative downstream conveyor TR1, TR2, TR3, determined by said detecting means 2.

Said stopping means are also designed to selectively deactivate, in a suitable step relation, the respective conveyors of the previous decoration stations, to prevent the entry of the corresponding ceramic tiles or slabs P thereinto, and/or to allow the completion of the exit of ceramic tiles or slabs P, if there are any, and let them stay on the respective downstream conveyor TR1, TR2, TR3.

The above mentioned means for activating and stopping conveyors have not been illustrated and are not described in detail because they are known.

A preferred embodiment of the system advantageously includes means (not illustrated) for activating/deactivating the spray nozzles U of the ceramic glaze present in each of the said decoration stations S1, S2, S3, operated in step relation with the activation/deactivation of the relative upstream conveyors T1, T2, T3 and internal conveyors TS1, TS2, TS3.

The transport system 1 is controlled by an electronic processing and control unit, for example a PLC of known type, not illustrated, designed to receive the information acquired by said detecting means 2, and to selectively control the mentioned activating/deactivating means for the above mentioned conveyors and activating/deactivating means for the spraying nozzles U.

The description clearly shows how the proposed method is extremely effective in avoiding production wastes in a decoration line with multiple decoration stations, when the advancing means of the ceramic tiles or slabs are stopped due to the problems.

It is important to highlight the flexibility and adaptability of the method to the various situations, which allows to untie the regular functionality of one decoration station from the subsequent one, so that the possible stopping of the feeding of the material in the latter does not cause a sequence of stops upstream and, consequently, no waste is produced in the previous decoration stations.

Similarly, the method is able to ensure regular functionality of the decoration stations following the one blocked by an obstacle, so as to evacuate the portion downstream of the decoration line before the advancement of the upstream stations is restored.

By eliminating the possibility of a tile or slab being stopped by stopping of one or more conveyors along the decoration line, when it is inside a decoration station, the most frequent condition for which waste is produced is prevented: in fact, the method includes checking in advance whether it is possible to allow the material to enter each decoration station at a constant speed and without stopping, allowing its complete exit, regardless of what happens in the downstream station(s).

The additional feature of the method, according to which the nozzles of the various spray decoration stations are selectively activated, does not affect the ability to have or not production waste, but it is certainly essential to reduce the waste of expensive ceramic glaze.

A further considerable advantage of grouping the ceramic slabs or tiles to be conveyed along the decoration line, together with dimensioning of conveyors so as to accommodate exactly a whole number of slabs or tiles, lies in the fact that in this way the conveying speed of the slabs or tiles on the decoration line for a given productivity is minimized, that is the productivity of the same decoration line at the same conveyor speed is maximized.

The method can be carried out in a simple and effective manner with the prior art means, such as those described with reference to the above system.

It is understood, however, that what is described above is illustrative and not limiting, therefore any variations in detail that may be necessary for technical and/or functional reasons, both in the method and in the system, are considered from now on within the protective scope defined by the claims below.

## Claims

1. Method for carrying ceramic tiles or slabs along a decoration line, this latter being formed by a plurality of spray decoration stations (S1, S2, S3) arranged in series, in which said ceramic tiles or slabs (P) are intended to enter, pass through and exit with a constant advancement speed, said decoration stations (S, S2, S3) being provided with respective internal conveyors (TS1, TS2, TS3), activated independently from one another, and with at least one independently operated connecting conveyor (TR) provided between said decoration stations (S1, S2, S3) and controlled by a control unit upon suitable consents, said method comprising:
positioning at least one of said ceramic tiles or slabs (P) upstream of a first decoration station (S1) belonging to said decoration line (LD), occupying a total space in length less than or equal to the minimum distance between two said consecutive decoration stations (S1, S2, S3); starting introduction and transit of at least one of said ceramic tiles or slabs (P) at the first decoration station (S1) or any of the subsequent decoration stations (S2, S3) only upon receipt of a consent indicative of the absence of further slabs or tiles (P) on the connecting conveyor (TR) directly downstream of the decoration station (S1, S2, S3) involved.

2. A method according to claim 1, **characterized by**:
- at least one of said ceramic tiles or slabs (P) reaching a first independently powered conveyor (T1), located directly upstream of the inlet of the first of said spray decoration stations (S1) having inside said respective second independently powered conveyor (TS1);
- checking, by detecting means (2), the absence of impediments or further slabs or tiles (P) on a third independently powered conveyor (TR1) located directly downstream of said first spray decoration station (S1), along at least one longitudinal portion of the third conveyor (TR1) long enough to hold said at least one ceramic tile or slab (P) coming out of said first spray decoration station (S1);
- operating, in step relation, said first, second, and third independently powered conveyors (T1, TS1, TR1), to determine, in the following order, the entry of said at least one ceramic tile or slab (P) into the first spray decoration station (S1), the transit through and the full exit from the latter of said at least one ceramic tile or slab (P), with constant advancing speed and without stops;
- repeating the previous steps for each of the subsequent spray decoration stations (S2, S3), which are associated with a relative upstream conveyor (T2, T3), an internal conveyor (TS2, TS3) and a downstream conveyor (TR2, TR3) with the respective independent power means, with the operation of said conveyors being subject to the aforementioned verification of the absence of obstacles or of additional slabs or tiles (P) downstream of the corresponding spray decoration station (S2, S3);
- stopping the upstream conveyor (T1, T2, T3) and the internal conveyor (TS1, TS2, TS3), of a spray decoration station (S1, S2, S3), before said ceramic tiles or slabs (P) enter the latter, in case said check detects an impediment present on the related downstream conveyor (TR1, TR2, TR3), or the presence of further slabs or tiles (P), with simultaneous stopping of the conveyors (T1, TS1, T2, TS2, T3, TS3) of the preceding decoration stations (S1, S2, S3), in such step relation as to prevent the corresponding ceramic tiles or slabs (P) from entering the stations, and/or to allow completion of the exit of ceramic tiles or slabs (P), if there are any, and let them stay on the respective downstream conveyor (TR1, TR2, TR3).

3. A method according to claim 2, **characterized by** formation of a set of said ceramic tiles or slabs (P) on said first conveyor (T1), said tiles or slabs leaning against one another, for a total length not exceeding the minimum free distance between one of said decoration stations (S1, S2, S3) and the next.

4. A method according to claim 2, **characterized in that**, in case said check detects an impediment present on the downstream conveyor (TR1, TR2, TR3) of one of said spray decoration stations (S1, S2, S3), with consequent stopping in step relation of the conveyors (T1, TS1, T2, TS2, T3, TS3) of the latter as well as those of the preceding decoration stations, the conveyors of the decoration stations (S2, S3) following the one with the impediment directly downstream, are kept in operation, thus allowing a regular flow in the corresponding section of said decoration line (LD).

5. A method according to any one of the previous claims, **characterized by** activation/deactivation of the ceramic glaze spraying nozzles (U) present in each of said decoration stations (S1, S2, S3) in step relation with activation/deactivation of the respective downstream (T1, T2, T3) conveyors and internal (TS1, TS2, TS3) conveyors.

6. A method according to any one of the previous claims, **characterized by** the exclusion of the last decoration station (S3) of above mentioned decoration line (LD) from said check procedure in case the downstream conveyor (TR3) forms at least a part of the outlet conveyor (TU) coming out from the decoration line (LD).

7. A system for carrying ceramic tiles or slabs, said ceramic tiles or slabs being conveyed along a decoration line, said system (1) including a plurality of spray decoration stations (S1, S2, S3) arranged in series, in which said ceramic tiles or slabs (P) are intended to enter, pass through and exit with a constant advancement speed, said system (1) comprising:
- a positioning and grouping station (SP), defined along a first independently powered conveyor (T1), located directly upstream of the inlet of the first of said spray decoration stations (S1) and aimed at receiving at least one of said ceramic tiles or slabs (P);
- at least one second independently powered conveyor (TS1), extending between the inlet and outlet of said first spray decoration station (S1);
- at least one third independently powered conveyor (TR1), located directly downstream of said first spray decoration station (S1), and having longitudinal dimension at least sufficient to accommodate said at least one ceramic tile or slab (P) coming out from said first spray decoration station (S1);
- at least one upstream conveyor (T2, T3), at least one internal conveyor (TS2, TS3) and at least one downstream conveyor (TR2, TR3), with respective independent power means, associated with each of the spray decoration stations (S2, S3) following the first one (S1);
- detecting means (2), arranged along said third conveyor (TR1) as well as along each of said downstream conveyors (TR2, TR3), to monitor the transit of said at least one ceramic tile or slab (P) thereon, or to check the presence or absence of a relative free longitudinal section sufficient to accommodate one of said ceramic tiles or slabs (P) coming out of the decoration station (S1, S2, S3) directly upstream;
- means for operating, in step relation, said first (T1), second (TS1), and third (TR1) independently powered conveyors as well as said conveyors with independent power means provided upstream (T2, T3), inside (TS2, TS3) and downstream (TR2, TR3) of each of the spray decoration stations (S2, S3) following the first one (S1), to determine, in the following order, the entry of said at least one ceramic tile or slab (P) into the first spray decoration station (S1) and the following spray decoration stations (S2, S3), the transit through and full exit from these latter of said at least one ceramic tile or slab (P), with constant advancing speed and without stops;
- means for stopping the upstream conveyor (T1, T2, T3) and the internal conveyor (TS1, TS2, TS3), of any spray decoration station (S1, S2, S3), before said ceramic tiles or slabs (P) enter the latter, in the presence of an impediment along the respective downstream conveyor (TR1, TR2, TR3), detected by said detecting means (2), said stopping means being provided for selectively deactivating, in suitable step relation, the respective conveyors (T1, TS1, T2, TS2, T3, TS3) of the preceding decoration stations (S1, S2, S3), so as to prevent the corresponding ceramic tiles or slabs (P) from entering the stations, and/or to allow the completion of the exit of ceramic tiles or slabs (P), if there are any, and let them stay on the respective downstream conveyor (TR1, TR2, TR3).

8. A system according to claim 7, **characterized by** means for activation/deactivation of the ceramic glaze spraying nozzles (U) present in each of said decoration stations (S1, S2, S3), operated in step relation with the activation/deactivation of the respective upstream conveyors (T1, T2, T3) and internal conveyors (TS1, TS2, TS3).

9. A system according to claim 7, **characterized in that** said conveyors (T1, TS1, TR1, T2, TS2, TR2, T3, TS3, TR3) are belt conveyors and by support means consisting of flat laths (3) interposed between each conveyor and the next one and designed to connect the advancing surface carrying said ceramic tiles or slabs (P) in the transfer region between the same conveyors.

10. A system according to claim 7, **characterized by** an electronic processing and control unit provided for receiving information acquired by said detecting means (2) and to selectively control the activation/deactivation of said conveyors (T1, TS1, TR1, T2, TS2, TR2, T3, TS3, TR3) and said means for activating/deactivating the spraying nozzles (U).

## Patentansprüche

1. Verfahren zum Transportieren von keramischen Fliesen oder Platten entlang einer Dekorationslinie, wobei letztere durch eine Vielzahl von in Reihe angeordneten Spritzdekorationsstationen (S1, S2, S3) gebildet wird, in die die keramischen Fliesen oder Platten (P) mit einer konstanten Vorschubgeschwindigkeit eintreten, sie durchlaufen und verlassen sollen, wobei die Dekorationsstationen (S, S2, S3) mit jeweiligen internen Förderern (TS1, TS2, TS3) versehen sind, die unabhängig voneinander aktiviert werden, und mit mindestens einem unabhängig betriebenen Verbindungsförderer (TR), der zwischen den Dekorationsstationen (S1, S2, S3) vorgesehen ist und von einer Steuereinheit nach geeigneten Vorgaben gesteuert wird, wobei das Verfahren umfasst: Positionieren mindestens einer der Keramikfliesen oder -platten (P) stromaufwärts einer ersten Dekorationsstation (S1), die zu der Dekorationslinie (LD) gehört und einen Gesamtraum in der Länge einnimmt, der kleiner oder gleich dem Mindestabstand zwischen zwei aufeinanderfolgenden Dekorationsstationen (S1, S2, S3) ist; Beginnen der Einführung und des Transports von mindestens einer der keramischen Fliesen oder Platten (P) an der ersten Dekorationsstation (S1) oder einer der nachfolgenden Dekorationsstationen (S2, S3) nur nach Erhalt einer Zustimmung, die anzeigt, dass keine weiteren Platten oder Fliesen (P) auf dem Verbindungsförderer (TR) direkt stromabwärts der betreffenden Dekorationsstation (S1, S2, S3) vorhanden sind.

2. Verfahren nach Anspruch 1, insbesondere **gekennzeichnet durch**
- mindestens eine der keramischen Fliesen oder Platten (P) einen ersten unabhängig angetriebenen Förderer (T1) erreicht, der sich direkt stromaufwärts des Einlasses der ersten der Sprühdekorationsstationen (S1) befindet, die im Inneren den jeweiligen zweiten unabhängig angetriebenen Förderer (TS1) aufweist;
- Erfassungsmittel (2), die Abwesenheit von Hindernissen oder weiteren Platten oder Fliesen (P) auf einem dritten unabhängig angetriebenen Förderer (TR1), der sich direkt stromabwärts der ersten Sprühdekorationsstation (S1) befindet, überprüfen und zwar entlang mindestens eines Längsabschnitts des dritten Förderers (TR1), der lang genug ist, um die mindestens eine Keramischen Fliese oder Platte (P), die aus der ersten Sprühdekorationsstation (S1) kommt, aufzunehmen;
- der erste, der zweite und der dritte unabhängig angetriebene Förderer (T1, TS1, TR1) schrittweise betrieben werden, um in der folgenden Reihenfolge den Eintritt der mindestens einen Keramikfliese oder -platte (P) in die erste Sprühdekorationsstation (S1), den Durchgang und den vollständigen Austritt der mindestens einen Keramikfliese oder -platte (P) aus der letzteren mit konstanter Vorschubgeschwindigkeit und ohne Stopps zu bestimmen;
- die vorhergehenden Schritte für jede der nachfolgenden Sprühdekorationsstationen (S2, S3) wiederholt werden, die mit einem entsprechenden stromaufwärtigen Förderer (T2, T3), einem inneren Förderer (TS2, TS3) und einem stromabwärtigen Förderer (TR2, TR3) mit den jeweiligen unabhängigen Antriebsmitteln verbunden sind, wobei der Betrieb dieser Förderer von der oben genannten Überprüfung des Fehlens von Hindernissen oder zusätzlichen Platten oder Fliesen (P) stromabwärts der entsprechenden Spritzdekorationsstation (S2, S3) abhängt;
- Anhalten des stromaufwärts gelegenen Förderers (T1, T2, T3) und des internen Förderers (TS1, TS2, TS3) einer Sprühdekorationsstation (S1, S2, S3), bevor die keramischen Fliesen oder Platten (P) in letztere eintreten, falls die Prüfung ein Hindernis auf dem entsprechenden stromabwärts gelegenen Förderer (TR1, TR2, TR3) feststellt, oder wenn die Kontrolle das Vorhandensein von weiteren Platten oder Fliesen (P) feststellt, wobei das Verfahren das gleichzeitige Anhalten der Förderer (T1, TS1, T2, TS2, T3, TS3) der vorangehenden Dekorationsstationen (S1, S2, S3) in einer solchen Schrittbeziehung umfasst, um zu verhindern, dass die entsprechenden keramischen Fliesen oder Platten (P) in die Stationen eintreten, und/oder um den Abschluss des Austritts der keramischen Fliesen oder Platten (P) zu ermöglichen, falls welche vorhanden sind, und sie auf dem jeweiligen stromabwärts gelegenen Förderer (TR1, TR2, TR3) zu belassen.

3. Verfahren nach Anspruch 2, **gekennzeichnet durch** die Bildung eines Satzes der keramischen Fliesen oder Platten (P) auf dem ersten Förderer (T1), wobei die Fliesen oder Platten über eine Gesamtlänge, die den minimalen freien Abstand zwischen einer der Dekorationsstationen (S1, S2, S3) und der nächsten nicht überschreitet, aneinander lehnen.

4. Verfahren nach Anspruch 2, **dadurch gekennzeichnet, dass** für den Fall, dass die Kontrolle ein Hindernis auf dem stromabwärts gelegenen Förderer (TR1, TR2, TR3) einer der Sprühdekorationsstationen (S1, S2, S3) feststellt, wobei das Verfahren das konsequente schrittweise Anhalten der Förderer (T1, TS1, T2, TS2, T3, TS3) der letzteren sowie derjenigen der vorangehenden Dekorationsstationen umfasst, wobei die Förderer der Dekorationsstationen (S2, S3), die derjenigen mit dem Hindernis direkt stromabwärts folgen, in Betrieb gehalten werden, wodurch ein gleichmäßiger Fluss in dem entsprechenden Abschnitt der Dekorationslinie (LD) ermöglicht wird.

5. Verfahren nach einem der vorhergehenden Ansprüche, **gekennzeichnet durch** Aktivierung/Deaktivierung der Keramikglasur-Sprühdüsen (U), die in jeder der Dekorationsstationen (S1, S2, S3) vorhanden sind, in Schrittbeziehung mit der Aktivierung/Deaktivierung der jeweiligen stromabwärts gelegenen (T1, T2, T3) Förderer und internen (TS1, TS2, TS3) Förderer.

6. Verfahren nach einem der vorhergehenden Ansprüche, **gekennzeichnet durch** den Ausschluss der letzten Dekorationsstation (S3) der oben erwähnten Dekorationslinie (LD) von der Kontrollprozedur, falls der stromabwärts gelegene Förderer (TR3) zumindest einen Teil des aus der Dekorationslinie (LD) kommenden Auslassförderers (TU) bildet.

7. System zum Transportieren von keramischen Fliesen oder Platten, wobei die keramischen Fliesen oder Platten entlang einer Dekorationslinie befördert werden, wobei das System (1) eine Vielzahl von in Reihe angeordneten Sprühdekorationsstationen (S1, S2, S3) umfasst, in die die keramischen Fliesen oder Platten (P) mit einer konstanten Vorschubgeschwindigkeit eintreten, sie durchlaufen und sie verlassen sollen, wobei das System (1) Folgendes umfasst:
- eine Positionierungs- und Gruppierungsstation (SP), die entlang eines ersten unabhängig angetriebenen Förderers (T1) definiert ist, der sich direkt stromaufwärts des Eingangs der ersten der Sprühdekorationsstationen (S1) befindet und dazu bestimmt ist, mindestens eine der keramischen Fliesen oder Platten (P) aufzunehmen;
- mindestens einen zweiten, unabhängig angetriebenen Förderer (TS1), der sich zwischen dem Einlass und dem Auslass der ersten Sprühdekorationsstation (S1) erstreckt;
- mindestens ein drittes, unabhängig angetriebenes Förderband (TR1), das sich direkt stromabwärts der ersten Sprühdekorationsstation (S1) befindet und eine Längsabmessung aufweist, die mindestens ausreicht, um die mindestens eine Keramikfliese oder -platte (P) aufzunehmen, die aus der ersten Sprühdekorationsstation (S1) kommt;
- einen stromaufwärts gelegenen Förderer (T2, T3), mindestens einen internen Förderer (TS2, TS3) und mindestens einen stromabwärts gelegenen Förderer (TR2, TR3) mit jeweils unabhängigen Antriebsmitteln, die mit jeder der auf die erste (S1) folgenden Spritzdekorationsstationen (S2, S3) verbunden sind;
- Erfassungsmittel (2), die entlang des dritten Förderers (TR1) sowie entlang jedes der stromabwärts gelegenen Förderer (TR2, TR3) angeordnet sind, um den Durchlauf der mindestens einen Keramischen Fliese oder Platte (P) darauf zu überwachen oder um das Vorhandensein oder Fehlen eines relativ freien Längsabschnitts zu überprüfen, der ausreicht, um eine der keramischen Fliesen oder Platten (P) aufzunehmen, die aus der unmittelbar stromaufwärts gelegenen Dekorationsstation (S1, S2, S3) kommt;
- Mittel zum schrittweisen Betrieb der ersten (T1), zweiten (TS1) und dritten (TR1) unabhängig angetriebenen Förderer sowie der Förderer mit unabhängigen Antriebsmitteln, die stromaufwärts (T2, T3), innerhalb (TS2, TS3) und stromabwärts (TR2, TR3) jeder der auf die erste (S1) folgenden Spritzdekorationsstationen (S2, S3) vorgesehen sind, wobei die Förderer so betrieben werden, dass sie in der folgenden Reihenfolge den Eintritt der mindestens einen Keramischen Fliese oder Platte (P) in die erste Sprühdekorationsstation (S1) und die folgenden Sprühdekorationsstationen (S2, S3), den Durchgang und den vollständigen Austritt der mindestens einen Keramischen Fliese oder Platte (P) durch diese letzteren mit konstanter Vorschubgeschwindigkeit und ohne Stopps bestimmen;
- Mittel zum Anhalten des stromaufwärts gelegenen Förderers (T1, T2, T3) und des internen Förderers (TS1, TS2, TS3) jeder Sprühdekorationsstation (S1, S2, S3) vor dem Eintritt der keramischen Fliesen oder Platten (P) in letztere bei Vorhandensein eines von den Erfassungsmitteln (2) erfassten Hindernisses entlang des jeweiligen stromabwärts gelegenen Förderers (TR1, TR2, TR3), wobei die Anhaltemittel vorgesehen sind, um selektiv in geeigneter Schrittbeziehung die jeweiligen Förderer (T1, TS1, T2, TS2, T3, TS3) der vorangehenden Dekorationsstationen (S1, S2, S3) zu deaktivieren, um zu verhindern, dass die entsprechenden keramischen Fliesen oder Platten (P) in die Stationen eintreten, und/oder um den Abschluss des Austritts der keramischen Fliesen oder Platten (P) zu ermöglichen, falls welche vorhanden sind, und sie auf dem jeweiligen stromabwärts gelegenen Förderer (TR1, TR2, TR3) zu belassen.

8. System nach Anspruch 7, **gekennzeichnet durch** Mittel zum Aktivieren/Deaktivieren der Keramikglasur-Sprühdüsen (U), die in jeder der Dekorationsstationen (S1, S2, S3) vorhanden sind und in Schrittbeziehung mit der Aktivierung/Deaktivierung der jeweiligen stromaufwärts gelegenen Förderer (T1, T2, T3) und internen Förderer (TS1, TS2, TS3) betrieben werden.

9. System nach Anspruch 7, **dadurch gekennzeichnet, dass** die Förderer (T1, TS1, TR1, T2, TS2, TR2, T3, TS3, TR3) Bandförderer sind und dass Stützmittel vorgesehen sind, die aus flachen Latten (3) bestehen, die zwischen jedem Förderer und dem nächsten Förderer angeordnet sind und dazu bestimmt sind, die die keramischen Fliesen oder Platten (P) tragende Vorschubfläche im Übergabebereich zwischen denselben Förderern zu verbinden.

10. System nach Anspruch 7, **gekennzeichnet durch** eine elektronische Verarbeitungs- und Steuereinheit, die vorgesehen ist, um von den Erfassungsmitteln (2) erfasste Informationen zu empfangen und die Aktivierung/Deaktivierung der Förderer (T1, TS1, TR1, T2, TS2, TR2, T3, TS3, TR3) und der Mittel zum Aktivieren/Deaktivieren der Sprühdüsen (U) selektiv zu steuern.

## Revendications

1. Procédé pour transporter des carreaux ou des dalles de céramique le long d'une ligne de décoration, cette dernière étant formée par une pluralité de stations de décoration par pulvérisation (S1, S2, S3) disposées en série, dans lesquelles lesdits carreaux ou dalles de céramique (P) sont destinés à entrer, passer et sortir avec une vitesse d'avancement constante, lesdites stations de décoration (S, S2, S3) étant pourvues de convoyeurs internes respectifs (TS1, TS2, TS3), activés indépendamment les uns des autres, et d'au moins un convoyeur de liaison (TR) actionné indépendamment, prévu entre lesdites stations de décoration (S1, S2, S3) et commandé par une unité de commande sur des consentements appropriés, ledit procédé comprenant: le positionnement d'au moins un desdits carreaux ou dalles de céramique (P) en amont d'une première station de décoration (S1) appartenant à ladite ligne de décoration (LD), occupant un espace total en longueur inférieur ou égal à la distance minimale entre deux desdites stations de décoration consécutives (S1, S2, S3); commencer l'introduction et le transit d'au moins un desdits carreaux ou dalles de céramique (P) au niveau de la première station de décoration (S1) ou de l'une quelconque des stations de décoration suivantes (S2, S3) uniquement après réception d'un consentement indiquant l'absence d'autres dalles ou carreaux (P) sur le convoyeur de connexion (TR) directement en aval de la station de décoration (S1, S2, S3) concernée.

2. Procédé selon la revendication 1, en particulier **caractérisé en ce que**:
- au moins un desdits carreaux ou dalles de céramique (P) atteint un premier convoyeur (T1) alimenté indépendamment, situé directement en amont de l'entrée de la première desdites stations de décoration par pulvérisation (S1) ayant à l'intérieur ledit second convoyeur respectif (TS1) alimenté indépendamment;
- la vérification, par des moyens de détection (2), de l'absence d'obstacles ou d'autres dalles ou carreaux (P) sur un troisième convoyeur alimenté indépendamment (TR1) situé directement en aval de ladite première station de décoration par pulvérisation (S1), le long d'au moins une partie longitudinale du troisième convoyeur (TR1) suffisamment longue pour contenir ledit au moins un carreau ou une dalle en céramique (P) sortant de ladite première station de décoration par pulvérisation (S1);
- l'activation, en relation par étapes, desdits premier, deuxième et troisième convoyeurs alimentés indépendamment (T1, TS1, TR1), pour déterminer, dans l'ordre suivant, l'entrée de ladite au moins un carreau ou une dalle de céramique (P) dans la première station de décoration par pulvérisation (S1), le transit à travers et la sortie complète de cette dernière de ladite au moins un carreau ou une dalle de céramique (P), avec une vitesse d'avancement constante et sans arrêts;
- la répétition des étapes précédentes pour chacune des stations de décoration par pulvérisation suivantes (S2, S3), qui sont associées à un convoyeur amont relatif (T2, T3), un convoyeur interne (TS2, TS3) et un convoyeur aval (TR2, TR3) avec les moyens de puissance indépendants respectifs, le fonctionnement desdits convoyeurs étant soumis à la vérification susmentionnée de l'absence d'obstacles ou de dalles ou carreaux supplémentaires (P) en aval de la station de décoration par pulvérisation correspondante (S2, S3);
- l'arrêt du convoyeur amont (T1, T2, T3) et le convoyeur interne (TS1, TS2, TS3), d'une station de décoration par pulvérisation (S1, S2, S3), avant que lesdites dalles ou carreaux céramiques (P) n'entrent dans cette dernière, dans le cas où ladite vérification détecte un obstacle présent sur le convoyeur aval correspondant (TR1, TR2, TR3), ou la présence d'autres dalles ou carreaux (P), avec l'arrêt simultané des convoyeurs (T1, TS1, T2, TS2, T3, TS3) des stations de décoration précédentes (S1, S2, S3), dans une relation d'étape telle qu'elle empêche les carreaux ou dalles de céramique (P) correspondants d'entrer dans les stations, et/ou pour permettre l'achèvement de la sortie des carreaux ou dalles de céramique (P), s'il y en a, et les laisser rester sur le convoyeur aval respectif (TR1, TR2, TR3).

3. Procédé selon la revendication 2, **caractérisé par** la formation d'un ensemble desdits carreaux ou dalles de céramique (P) sur ledit premier convoyeur (T1), lesdits carreaux ou dalles s'appuyant les uns contre les autres, pour une longueur totale ne dépassant pas la distance libre minimale entre l'une desdites stations de décoration (S1, S2, S3) et la suivante.

4. Procédé selon la revendication 2, **caractérisé en ce que**, dans le cas où ledit contrôle détecte un empêchement présent sur le convoyeur aval (TR1, TR2, TR3) de l'une desdites stations de décoration par pulvérisation (S1, S2, S3), avec l'arrêt consécutif en relation progressive des convoyeurs (T1, TS1, T2, TS2, T3, TS3) de cette dernière ainsi que ceux des stations de décoration précédentes, les convoyeurs des stations de décoration (S2, S3) suivant celle avec l'empêchement directement en aval, sont maintenus en fonctionnement, permettant ainsi un écoulement régulier dans la section correspondante de ladite ligne de décoration (LD).

5. Procédé selon l'une quelconque des revendications précédentes, **caractérisé par** l'activation/désactivation des buses de pulvérisation de glaçure céramique (U) présentes dans chacune desdites stations de décoration (S1, S2, S3) en relation progressive avec l'activation/désactivation des convoyeurs aval (T1, T2, T3) et des convoyeurs internes (TS1, TS2, TS3) respectifs.

6. Procédé selon l'une quelconque des revendications précédentes, **caractérisé par** l'exclusion de la dernière station de décoration (S3) de la ligne de décoration (LD) mentionnée ci-dessus de ladite procédure de vérification dans le cas où le convoyeur aval (TR3) forme au moins une partie du convoyeur de sortie (TU) sortant de la ligne de décoration (LD).

7. Système pour transporter des carreaux ou des dalles de céramique, lesdits carreaux ou dalles de céramique étant transportés le long d'une ligne de décoration, ledit système (1) comprenant une pluralité de stations de décoration par pulvérisation (S1, S2, S3) disposées en série, dans lesquelles lesdits carreaux ou dalles de céramique (P) sont destinés à entrer, passer et sortir avec une vitesse d'avancement constante, ledit système (1) comprenant:
- une station de positionnement et de regroupement (SP), définie le long d'un premier convoyeur (T1) alimenté indépendamment, situé directement en amont de l'entrée de la première desdites stations de décoration par pulvérisation (S1) et destiné à recevoir au moins un desdits carreaux ou dalles en céramique (P);
- au moins un deuxième convoyeur alimenté indépendamment (TS1), s'étendant entre l'entrée et la sortie de ladite première station de décoration par pulvérisation (S1);
- au moins un troisième convoyeur alimenté indépendamment (TR1), situé directement en aval de ladite première station de décoration par pulvérisation (S1), et ayant une dimension longitudinale au moins suffisante pour recevoir ledit au moins un carreau ou une dalle de céramique (P) sortant de ladite première station de décoration par pulvérisation (S1);
- au moins un convoyeur amont (T2, T3), au moins un convoyeur interne (TS2, TS3) et au moins un convoyeur aval (TR2, TR3), avec des moyens d'alimentation indépendants respectifs, associés à chacune des stations de décoration par pulvérisation (S2, S3) suivant la première (S1);
- des moyens de détection (2), disposés le long dudit troisième convoyeur (TR1) ainsi que le long de chacun desdits convoyeurs en aval (TR2, TR3), pour surveiller le transit dudit au moins un carreau ou une dalle de céramique (P) sur celui-ci, ou pour vérifier la présence ou l'absence d'une section longitudinale libre relative suffisante pour recevoir l'un desdits carreaux ou dalles de céramique (P) sortant de la station de décoration (S1, S2, S3) directement en amont;
- des moyens pour faire fonctionner, en relation d'étape, lesdits premier (T1), deuxième (TS1) et troisième (TR1) convoyeurs alimentés indépendamment ainsi que lesdits convoyeurs avec des moyens d'alimentation indépendants prévus en amont (T2, T3), à l'intérieur (TS2, TS3) et en aval (TR2, TR3) de chacune des stations de décoration par pulvérisation (S2, S3) suivant la première (S1), déterminer, dans l'ordre suivant, l'entrée de ladite au moins un carreau ou une dalle de céramique (P) dans la première station de décoration par pulvérisation (S1) et les stations de décoration par pulvérisation suivantes (S2, S3), le transit à travers et la sortie complète de ces dernières de ladite au moins un carreau ou une dalle de céramique (P), avec une vitesse d'avancement constante et sans arrêts;
- des moyens pour arrêter le convoyeur amont (T1, T2, T3) et le convoyeur interne (TS1, TS2, TS3), de n'importe quelle station de décoration par pulvérisation (S1, S2, S3), avant que lesdits carreaux ou dalles de céramique (P) n'entrent dans cette dernière, en présence d'un obstacle le long du convoyeur aval respectif (TR1, TR2, TR3), détecté par lesdits moyens de détection (2), lesdits moyens d'arrêt sont prévus pour désactiver sélectivement, dans une relation d'étape appropriée, les convoyeurs respectifs (T1, TS1, T2, TS2, T3, TS3) des stations de décoration précédentes (S1, S2, S3), de manière à empêcher les carreaux ou dalles de céramique (P) correspondants d'entrer dans les stations, et/ou pour permettre l'achèvement de la sortie des carreaux ou dalles de céramique (P), s'il y en a, et les laisser rester sur le convoyeur aval respectif (TR1, TR2, TR3).

8. Système selon la revendication 7, **caractérisé par** des moyens d'activation/désactivation des buses de pulvérisation de glaçure céramique (U) présentes dans chacun desdits stations de décoration (S1, S2, S3), actionnés en relation progressive avec l'activation/désactivation des convoyeurs amont respectifs (T1, T2, T3) et des convoyeurs internes (TS1, TS2, TS3).

9. Système selon la revendication 7, **caractérisé en ce que** lesdits convoyeurs (T1, TS1, TR1, T2, TS2, TR2, T3, TS3, TR3) sont des convoyeurs à courroie et que des moyens de support consistant en des lattes plates (3) sont interposées entre chaque convoyeur et le suivant et conçues pour relier la surface d'avancement portant lesdits carreaux ou dalles de céramique (P) dans la région de transfert entre les mêmes convoyeurs.

10. Système selon la revendication 7, **caractérisé par** une unité électronique de traitement et de commande prévue pour recevoir des informations acquises par lesdits moyens de détection (2) et pour commander sélectivement l'activation/désactivation desdits convoyeurs (T1, TS1, TR1, T2, TS2, TR2, T3, TS3, TR3) et desdits moyens pour activer/désactiver les buses de pulvérisation (U).
